(19) Europäisches Patentamt
European Patent Office
Office européen des brevets

(11) Veröffentlichungsnummer: **0 043 796**
B1

# (12) EUROPÄISCHE PATENTSCHRIFT

(45) Veröffentlichungstag der Patentschrift: **08.05.85**

(51) Int. Cl.[4]: **C 09 B 43/44,** C 09 B 62/09 // C09B33/10

(21) Anmeldenummer: **81810244.4**

(22) Anmeldetag: **15.06.81**

(54) **Verfahren zur Herstellung von Disazofarbstoffen.**

(30) Priorität: **20.06.80 CH 4754/80**

(43) Veröffentlichungstag der Anmeldung: **13.01.82 Patentblatt 82/2**

(45) Bekanntmachung des Hinweises auf die Patenterteilung: **08.05.85 Patentblatt 85/19**

(84) Benannte Vertragsstaaten: **CH DE FR GB LI**

(56) Entgegenhaltungen:
**DE - A - 2 738 823**
**DE - A - 2 740 152**
**FR - A - 2 185 661**

(73) Patentinhaber: **CIBA-GEIGY AG, Postfach, CH-4002 Basel (CH)**

(72) Erfinder: **Seitz, Karl, Dr., Schützenweg 9, CH-4104 Oberwil (CH)**

EP 0 043 796 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Orientierung der Kupplung bei Aminonaphtholsulfonsäuren wird durch den pH-Wert des Kupplungsgemisches stark beeinflußt. So tritt die Azogruppe in saurem Medium in ortho-Stellung zur Aminogruppe, in alkalischem Medium in ortho-Stellung zur Hydroxygruppe ein. 1-Amino-8-naphtholsulfonsäuren mit freien ortho-Positionen können mit zwei Äquivalenten Diazoniumverbindung kuppeln. Dabei wird zuerst im sauren Medium die Kupplung in der ortho-Aminostellung, und anschließend im alkalischen Bereich die Kupplung in der ortho-Hydroxystellung ausgeführt. 1-Amino-8-naphtholsulfonsäuren, die zuerst in alkalischem Medium gekuppelt werden (o-Hydroxyazofarbstoffe), lassen sich nicht zu Disazofarbstoffen weiterkuppeln.

Die Disazofarbstoffe der 1-Amino-8-hydroxynaphthalin-3,6-disulfonsäure (H-Säure) vom Typ

$$D \xrightarrow{a} \text{H-Säure} \xleftarrow{s} D \qquad (1)$$

werden daher stets in der Weise hergestellt, daß man zuerst in saurem Bereich (s) und anschließend in alkalischem Bereich (a) kuppelt.

Mit H-Säure als bifunktioneller Kupplungskomponente erhält man einige wichtige Farbstoffe aus der Gruppe der Säure-, Direkt- und Reaktivfarbstoffe für Marineblau- und Schwarztöne, wobei die Nuance von den Substituenten in den Diazokomponenten abhängt. Vom Typ des H-Säure-Disazofarbstoffes der Formel (1) leiten sich auch die wichtigsten Reaktiv-Marineblaumarken ab.

Ein besonderer Fall sind bireaktive H-Säure-Disazofarbstoffe von Typ (1), die in beiden Diazokomponenten D einen Reaktivrest enthalten. Sie werden hergestellt, indem man beispielsweise diazotierte monoacylierte Diaminobenzolsulfonsäuren in saurer und alkalischer Lösung auf H-Säure kuppelt, die Acylreste durch Verseifen abspaltet und die freigewordenen Aminogruppen mit Reaktivkomponenten, wie Cyanurchlorid, kondensiert.

Dabei besteht die Gefahr, daß, vor allem in konzentrierter Lösung, bei der ersten Kupplung in Gegenwart von Salzsäure ein Teil der H-Säure ausfällt und durch den gebildeten o-Aminomonoazofarbstoff

$$\text{H-Säure} \xleftarrow{s} D \qquad (2)$$

eingeschlossen und somit nicht gekuppelt wird. Dann enthält der Monoazofarbstoff (2) nach Abschluß der sauren Kupplung noch unveränderte H-Säure. Diese wird bei der anschließenden alkalischen Kupplung des Monoazofarbstoffs (2) ebenfalls gekuppelt, so daß neben dem gewünschten Disazofarbstoff (1) auch ein unerwünschter o-Hydroxymonoazofarbstoff

$$D \xrightarrow{a} \text{H-Säure} \qquad (3)$$

entsteht. Dieser bildet eine störende rote Verunreinigung im gewünschten Disazofarbstoff (1).

Der Nachteil, daß in salzsaurer Lösung die H-Säure teilweise ausfällt und so der sauren Kupplung entzogen wird, kann nur dadurch beseitigt werden, daß man in sehr verdünnter Lösung kuppelt. In diesem Falle sind aber große Lösungsvolumina zu bewältigen, was einen erheblichen apparativen Aufwand erfordert und daher bei einer Herstellung in technischem Maßstab aus wirtschaftlichen Gründen nicht in Betracht kommt. In der Technik wird daher in konzentrierteren Lösungen gearbeitet; eine Verunreinigung des Endproduktes durch den o-Hydroxymonoazofarbstoff (3) ist dabei nicht zu vermeiden.

Der vorliegenden Erfindung lag daher die Aufgabe zugrunde, für den speziellen weiter unten definierten Chromophor ein Herstellungsverfahren zu finden, welches den oben geschilderten Nachteil nicht aufweist, welches also die Bildung der roten Verunreinigung vermeidet und somit zu einem rein marineblauen Farbstoff führt. Wir haben gefunden, daß die Aufgabe durch das in folgendem beschriebene Verfahren zufriedenstellend gelöst wird.

Gegenstand der vorliegenden Erfindung ist ein Verfahren zur Herstellung von Disazofarbstoffen der Formel

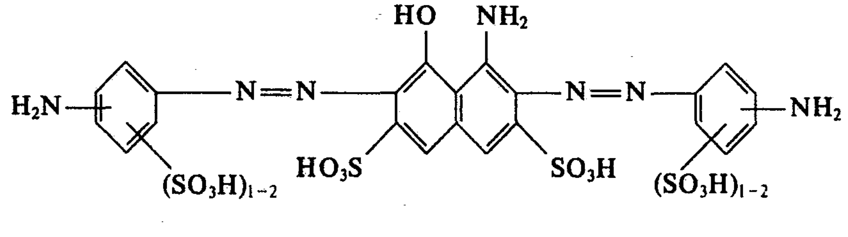 (4)

dadurch gekennzeichnet, daß man 1-Amino-8-hydroxynaphthalin-3,6-disulfonsäure mit einem Äquivalent einer diazotierten Monoacetyl-m- oder -p-diaminobenzolsulfonsäure der Formel

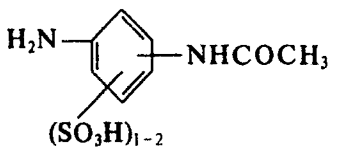

(5)

in stark saurer, Naphthalinsulfonsäure enthaltender Lösung kuppelt, die erhaltene Monoazoverbindung mit einem weiteren Äquivalent der gleichen Diazokomponente der Formel (5) in schwach alkalischer Lösung kuppelt, und den erhaltenen Disazofarbstoff, zwecks Abspaltung der beiden Acetylgruppen, verseift.

Die saure Kupplung wird praktisch so ausgeführt, daß man eine Lösung der 1-Amino-8-hydroxy-naphthalin-3,6-disulfonsäure in die stark saure, Naphthalinsulfonsäure enthaltende Diazosuspension eingibt.

Die stark saure, Naphthalinsulfonsäure enthaltende Diazosuspension kann z.B. in der Weise hergestellt werden, daß man eine die Diazokomponente und Nitrit enthaltende wäßrige Lösung mit Salzsäure versetzt und $\alpha$-Naphthalinsulfonsäure zugibt. Statt Salzsäure kann man auch Schwefelsäure verwenden. Man versetzt die wäßrige Lösung der Diazokomponente und des Nitrits mit so viel konzentrierter Schwefelsäure, daß eine mäßig konzentrierte wäßrige Schwefelsäure (20—60%) entsteht und setzt dieser $\alpha$-Naphthalinsulfonsäure zu, oder man verwendet eine Lösung von $\alpha$-Naphthalinsulfonsäure in Schwefelsäure. Als solche verwendet man vorzugsweise mit Wasser verdünnte Naphthalinsulfierungsgemische, z.B. ein Rohsulfierungsgemisch von Naphthalin, das vorwiegend $\alpha$-Naphthalinsulfonsäure und Schwefelsäure enthält und mit 3 bis 5 Teilen Wasser verdünnt wird.

Eine weitere bevorzugte Ausführungsform des erfindungsgemäßen Verfahrens ist somit dadurch gekennzeichnet, daß man die Diazosuspension mittels eines schwefelsauren Sulfierungsgemisches von Naphthalin herstellt.

Die an zweiter Stelle auszuführende alkalische Kupplung erfolgt in bekannter Weise in schwach alkalischem Medium. Vorzugsweise führt man die Kupplung der Monoazoverbindung mit einem weiteren Äquivalent der Diazokomponenten der Formel (5) in bicarbonatalkalischer Lösung aus.

Als Diazokomponenten der Formel (5) kommen in Betracht:

1-Amino-4-acetylamino-benzol-2- oder -3-sulfonsäure,
1-Amino-3-acetylamino-benzol-4- oder -6-sulfonsäure,
1-Amino-3-acetylamino-benzol-4,6-disulfonsäure,
1-Amino-4-acetylamino-benzol-2,5- oder -2,6-disulfonsäure.

Vorzugsweise verwendet man als Diazokomponente die 1-Amino-3-acetylamino-benzol-6-sulfonsäure (3-Aminoacetanilid-4-sulfonsäure).

Die Verseifung der beiden Acetylaminogruppen nach vollzogener alkalischer Kupplung führt man in bekannter Weise mit alkalischen Mitteln aus. Vorzugsweise führt man die Verseifung mittels Natriumhydroxid aus.

Die Disazofarbstoffe der Formel (4) sind wertvolle Zwischenprodukte für die Herstellung von bireaktiven Farbstoffen; diese erhält man durch Kondensation von Disazofarbstoffen der Formel (4) mit Reaktivkomponenten. Als Reaktivkomponente ist von besonderem Interesse das Cyanurchlorid. Kondensiert man diese mit einem Disazofarbstoff der Formel (4) so erhält man einen Bis-dichlortriazinfarbstoff, der mit einem aliphatischen oder aromatischen Amin zu dem weniger reaktionsfähigen Bismonochlortriazinfarbstoff kondensiert werden kann. Einen wertvollen bireaktiven Disazofarbstoff erhält man, wenn man nach dem erfindungsgemäßen Verfahren einen Disazofarbstoff der Formel (4) mit 3-Amino-acetanilid-4-sulfonsäure als Diazokomponente herstellt, diesen mit zwei Äquivalenten Cyanurchlorid kondensiert und den erhaltenen Bis-dichlor-triazinfarbstoff mit zwei Äquivalenten Metanilsäure kondensiert.

Das erfindungsgemäße Verfahren vermeidet den eingangs geschilderten Nachteil der Bildung des störenden Nebenproduktes. Der nach der sauren Kupplung anfallende gut kristallisierende o-Aminomonoazofarbstoff wird abfiltriert, wobei eventuell noch vorhandene Spuren unveränderter H-Säure mit dem Filtrat ablaufen.

Der nach der zweiten, alkalischen Kupplung und Verseifung erhaltene Disazofarbstoff ist ein chromatographisch einheitliches Produkt, das frei von dem roten o-Hydroxymonoazofarbstoff ist.

Saure Kupplungen in Gegenwart von Naphthalinsulfonsäure sind an sich bekannt. Jedoch wurde die Naphthalinsulfonsäure vor allem zur Stabilisierung von Diazolösungen verwendet. Ferner eignet sich Naphthalinsulfonsäure auch deshalb für Diazotierungen, weil sie ein hohes Lösevermögen für Amine und für die salpetrige Säure hat. Es konnte aber nicht vorausgesehen werden, daß die Anwesenheit von Naphthalinsulfonsäure die Bildung der störenden roten Verunreinigung bei der Herstellung von H-Säure-Disazofarbstoffen vollkommen unterbindet und somit den schon lange bekannten, weiter oben geschilderten Nachteil beseitigt. Die Wirkung der Naphthalinsulfonsäure nach dem erfindungsgemäßen Verfahren ist daher überraschend. Das erfindungsgemäße Verfahren liefert den Disazofarbstoff der Formel (4) frei von dem roten o-Hydroxymonoazofarbstoff.

Das Verfahren der vorliegenden Anmeldung ist somit erfinderisch und technisch fortschrittlich.

In den nachfolgenden Beispielen bedeuten die Teile, sofern nichts anderes angegeben wird, Gewichtsteile, die Prozente Gewichtsprozente, und die Temperaturen sind in Celsiusgraden angegeben. Zwischen Gewichts- und Volumenteilen besteht das gleiche Verhältnis wie zwischen Gramm und Kubikzentimeter.

Beispiel 1

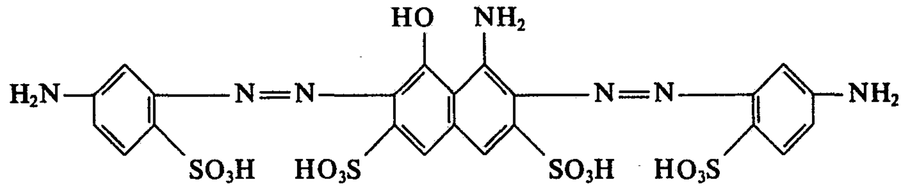

Es werden 50,6 Teile 3-Amino-acetanilid-4-sulfonsäure in 200 Volumteilen Wasser mit 22 Volumteilen 10n Natronlauge neutral gelöst. Man kühlt mit 200 Teilen Eis auf 0 bis 5° und gibt 55 Volumteile 4n Natriumnitritlösung zu. Hierauf läßt man im Laufe von 10 Minuten 160 Volumteile einer Naphthalinsulfonsäurelösung zulaufen. Das Diazoniumsalz fällt aus und nach etwa 2 Stunden wird ein eventueller Nitritüberschuß mit etwas Sulfaminsäure zerstört.

Die verwendete Naphthalinsulfonsäurelösung wird wie folgt hergestellt:

800 Teile Naphthalin werden in 1141 Teilen 98%iger Schwefelsäure eingetragen, und die Mischung wird im Laufe von einer Stunde auf 90 bis 92° erwärmt. Man hält das Sulfierungsgemisch etwa $2^1/_2$ Stunden bei dieser Temperatur, trägt anschließend auf 2000 Volumteile Wasser aus und stellt das Volumen mit Wasser auf 4200 Volumteile.

Nun werden 63,8 Teile H-Säure in 400 Volumteilen Wasser angerührt, und die Mischung wird mit etwa 20 Volumteilen 10n Natronlauge auf pH 6 gestellt. Die erhaltene Lösung wird auf 0 bis 5° gekühlt und im Laufe von 30 Minuten zur Diazosuspension zutropfen gelassen. Es entsteht eine dicke Paste, die über Nacht bei Raumtemperatur gerührt wird. Am folgenden Tag ist die sauer ausgekuppelte H-Säure kristallin ausgefallen. Zur Vervollständigung der Abscheidung werden dem Kupplungsgemisch, das ein Volumen von etwa 1300 Volumteilen hat, in 3 Portionen noch 39 Teile Kochsalz (= 3%) zugesetzt. Der abgeschiedene Körper wird abfiltriert und mit 500 Volumteilen Kochsalzlösung gewaschen.

Man erhält etwa 340 Teile einer Paste, entsprechend etwa 85% der Theorie (Nitrittiter).

Der erhaltene Monoazofarbstoff wird hierauf in 500 Volumteilen Wasser angeschlämmt, mit etwa 26 Volumteilen 10n Natronlauge neutral gelöst, und die Lösung wird mit 40 Teilen Natriumbicarbonat versetzt (Volumen etwa 800 Volumteile).

Es werden 46 Teile 3-Amino-acetanilid-4-sulfonsäure in 300 Volumteilen Wasser mit etwa 20 Volumteilen 10n Natronlauge neutral gelöst, und die Lösung wird auf 5° abgekühlt. Man diazotiert mit 50 Volumteilen 4n Natriumnitritlösung und 50 Volumteilen 10n Salzsäure. Das Diazoniumsalz fällt aus, und nach etwa 2 Stunden wird ein eventueller Nitritüberschuß mit wenig Sulfaminsäure zerstört.

Die so erhaltene Diazosuspension läßt man hierauf im Laufe von 15 Minuten zur Lösung der Kupplungskomponente, deren Herstellung oben beschrieben ist, fließen.

Nach etwa 5 Stunden wird das Kupplungsgemisch mit 68 Teilen Natriumhydroxid versetzt und während 3 Stunden auf 80 bis 85° erwärmt. Nach dem Erkalten wird die klare Lösung mit etwa 160 Volumteilen 10n Salzsäure auf pH 6 gestellt (Volumen 2000 Volumteile) und mit 400 Teilen Kochsalz (= 20 Vol.%) versetzt. Nach etwa 5 Stunden wird der ausgefallene Disazofarbstoff abfiltriert und mit 1000 Volumteilen Kochsalzlösung gewaschen.

Man erhält etwa 280 Teile einer Paste, entsprechend einer Ausbeute von 75% der Theorie (Nitrit- und Titantiter) an Disazofarbstoff der oben angegebenen Formel.

Beispiel 2

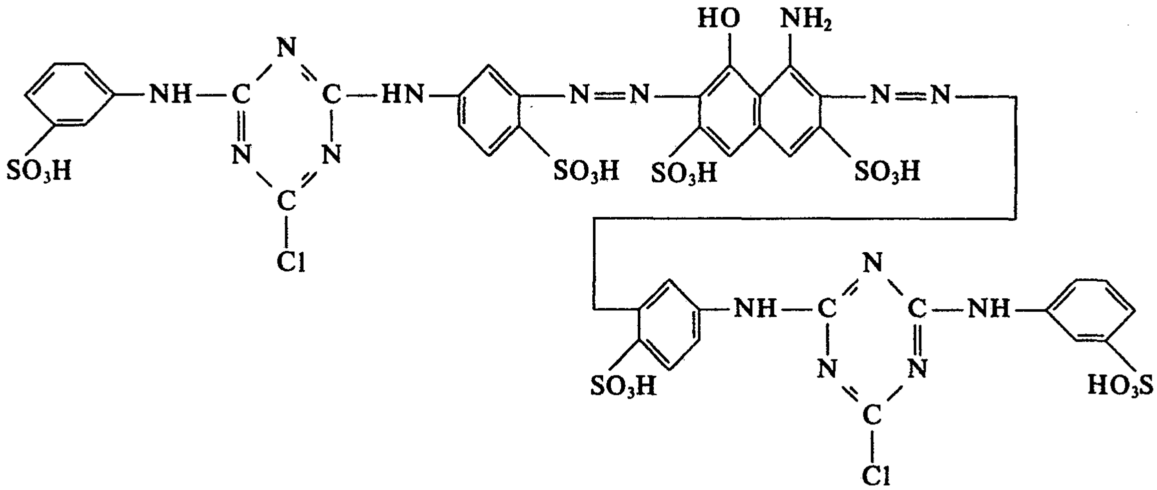

Es werden 35,85 Teile des Disazofarbstoffes von Beispiel 1 in 200 Volumteilen Wasser gelöst, und die Lösung wird mit einer feinen Suspension von 19 Teilen Cyanurchlorid in 70 Volumteilen Eiswasser versetzt. Während der Kondensation wird der pH-Wert durch Zutropfen von 2n Natronlauge bei 7 gehalten, wozu etwa 52 Volumteile 2n Natronlauge benötigt werden.

Nach etwa 2 Stunden gibt man zu dem primären Kondensationprodukt eine neutrale Lösung, bestehend aus 17,3 Teilen Metanilsäure, etwa 10 Volumteilen 10n Natronlauge und 70 Volumteilen Wasser. Man erwärmt die Reaktionsmischung langsam auf 40 bis 45° und hält den pH-Wert durch Zutropfen von 2n Natronlauge bei 8, wozu etwa 47 Volumteile 2n Natronlauge benötigt werden. Nach etwa 2 Stunden ist auch die zweite Kondensation beendet, und der Farbstoff wird aus der Reaktionslösung (Volumen 800 Volumteile) mit 40 Teilen Kochsalz (= 5 Vol.%) ausgesalzen. Nach 2 Stunden wird der Farbstoff abfiltriert.

Man erhält etwa 200 Teile einer Paste, die den Farbstoff der oben angegebenen Formel enthält. Die Ausbeute nach dem Trocknen im Vakuum beträgt 80 Teile.

Der Farbstoff färbt Baumwollfasern nach dem Ausziehfärbeverfahren oder dem Pad-steam-Färbeverfahren in tiefen reinen Marineblautönen.

**Patentansprüche**

1. Verfahren zur Herstellung von Disazofarbstoffen der Formel

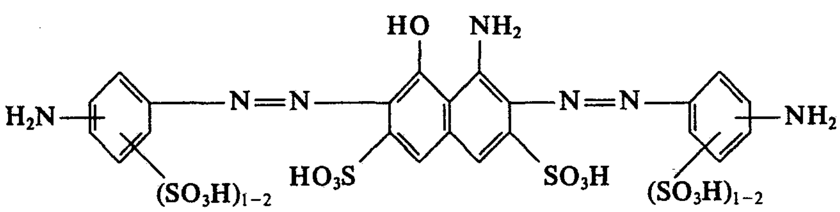

(4)

dadurch gekennzeichnet, daß man 1-Amino-8-hydroxy-naphthalin-3,6-disulfonsäure mit einem Äquivalent einer diazotierten Monoacetyl-m- oder -p-diaminobenzol-sulfonsäure der Formel

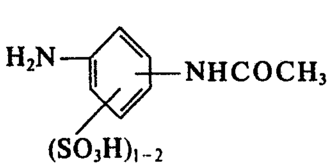

(5)

in stark saurer, Naphthalinsulfonsäure enthaltender Lösung kuppelt, die erhaltene Monoazoverbindung mit einem weiteren Äquivalent der gleichen Diazokomponente der Formel (5) in schwach alkalischer Lösung kuppelt, und den erhaltenen Disazofarbstoff, zwecks Abspaltung der beiden Acetylgruppen, verseift.

2. Verfahren gemäß Anspruch 1, dadurch gekennzeichnet, daß man eine Lösung der 1-Amino-8-hydroxynaphthalin-3,6-disulfonsäure in die stark saure, Naphthalinsulfonsäure enthaltende Diazosuspension eingibt.

3. Verfahren gemäß Anspruch 1 oder 2, dadurch gekennzeichnet, daß man die Diazosuspension mittels eines schwefelsauren Sulfierungsgemisches von Naphthalin herstellt.

4. Verfahren gemäß Anspruch 1, dadurch gekennzeichnet, daß man die Kupplung der Monoazoverbindung mit einem weiteren Äquivalent der Diazokomponenten der Formel (5) in bicarbonatalkalischer Lösung ausführt.

5. Verfahren gemäß einem der Ansprüche 1 bis 4, dadurch gekennzeichnet, daß man als Diazokomponente 3-Aminoacetanilid-4-sulfonsäure verwendet.

6. Verfahren gemäß Anspruch 1, dadurch gekennzeichnet, daß man die Verseifung mittels Natriumhydroxid ausführt.

7. Verfahren gemäß einem der Ansprüche 1 bis 6, dadurch gekennzeichnet, daß man zusätzlich die Verbindung der Formel (4) mit Cyanurchlorid und Metanilsäure kondensiert, so daß ein Farbstoff der Formel

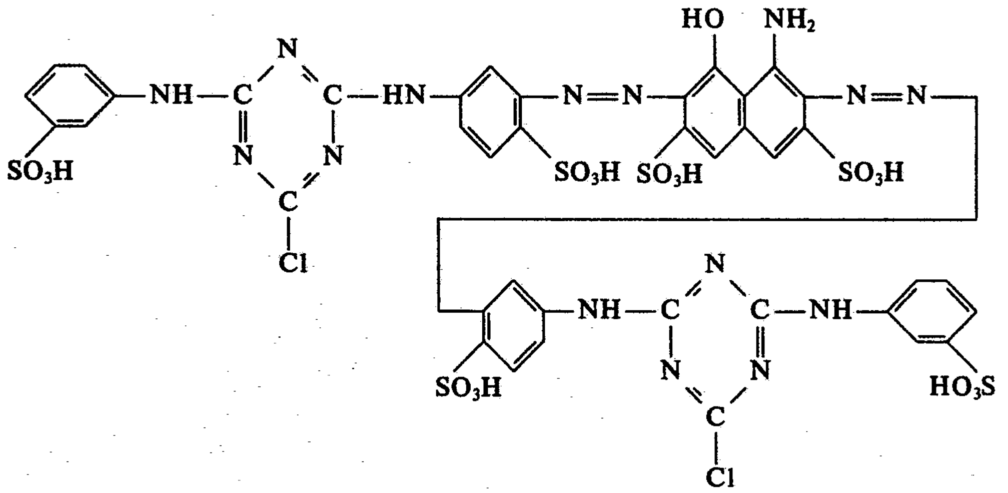

(7)

erhalten wird.

## Claims

1. A process for the production of a disazo dye of the formula

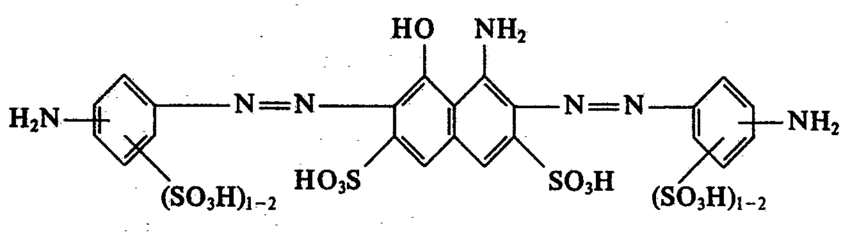

(4)

which process comprises coupling 1-amino-8-hydroxy-naphthalene-3,6-disulfonic acid with one equivalent of a diazotised monoacetyl-m- or p-diaminobenzenesulfonic acid of the formula

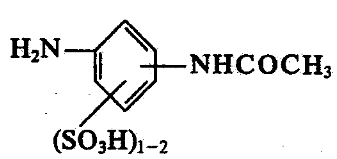

(5)

in a strong acid solution containing naphthalenesulfonic acid, coupling the resultant monoazo compound with a further equivalent of the same diazo component of the formula (5) in weakly alkaline solution, and saponifying the resultant disazo dye to remove both acetyl groups.

2. A process according to claim 1, wherein a solution of 1-amino-8-hydroxynaphthalene-3,6-disulfonic acid is added to the strongly acid diazo suspension containing naphthalenesulfonic acid.

3. A process according to either of claims 1 or 2, wherein the diazo suspension is prepared with a sulfonation mixture of naphthalene in sulfuric acid.

4. A process according to claim 1, wherein the coupling of the monoazo compound with a further equivalent of the diazo component of the formula (5) ist carried out in a solution which is made alkaline with bicarbonate.

5. A process according to any one of claims 1 to 4, wherein 3-aminoacetanilide-4-sulfonic acid is used as diazo component.

6. A process according to claim 1, wherein the saponification is carried out with sodium hydroxide.

7. A process according to any one of claims 1 to 6, wherein additionally a compound of the formula (4) is condensed with cyanuric chloride and metalinic acid to give a dye of the formula

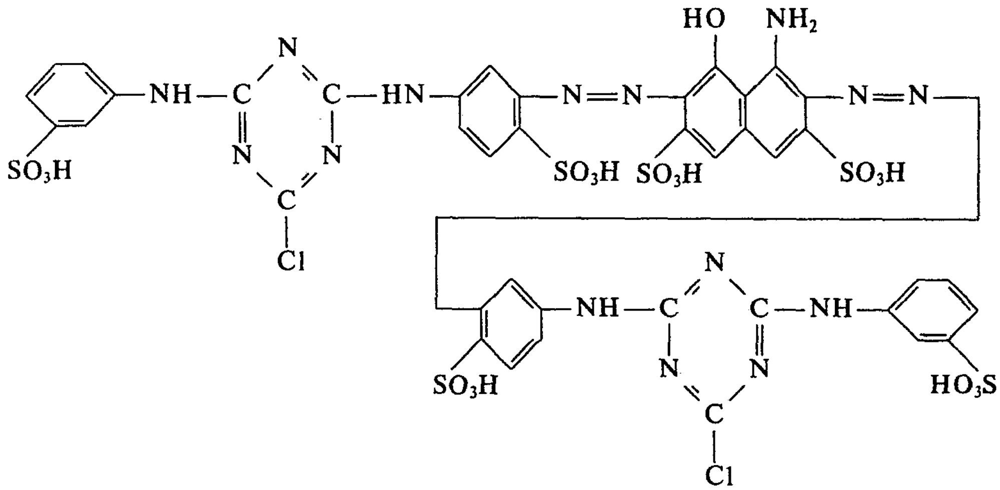

(7)

**Revendications**

1. Procédé pour la préparation de colorants disazoïques de formule:

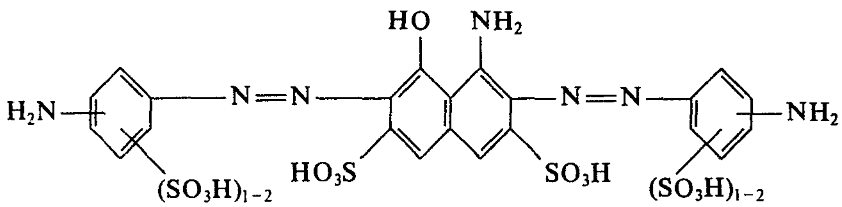

(4)

caractérisé par le fait qu'on copule dans une solution fortement acide, contenant de l'acide naphthalènesulfonique, l'acide 1-amino-8-hydroxy-naphthalène-3,6-disulfonique avec un équivalent d'un acide mono-acétyl -m- ou -p-diaminobenzènesulfonique diazoté ayant la formule:

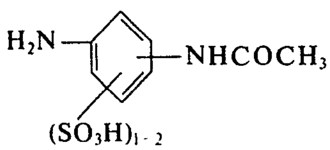

(5)

qu'on copule le composé mono-azoïque obtenu avec un autre équivalent du même constituant diazo de formule (5) en solution faiblement alcaline puis qu'on saponifie le colorant disazoïque obtenu pour séparer les deux groupes acétyle.

2. Procédé selon la revendication 1, caractérisé par le fait qu'on introduit une solution de l'acide 1-amino-8-hydroxynaphthalène-3,6-disulfonique dans la suspension fortement acide de diazo contenant l'acide naphthalènesulfonique.

3. Procédé selon la revendication 1 ou 2, caractérisé par le fait qu'on prépare la suspension de diazo au moyen d'un mélange de sulfonation sulfurique du naphthalène.

4. Procédé selon la revendication 1, caractérisé par le fait que la copulation du composé mono-azoïque avec un autre équivalent du constituant diazo de formule (5) est effectuée dans une solution de bicarbonate alcalin.

5. Procédé selon l'une des revendications 1 à 4, caractérisé par le fait qu'on utilise comme constituant diazo l'acide 3-amino-acétanilide-4-sulfonique.

6. Procédé selon la revendication 1, caractérisé par le fait que la saponification est effectuée par l'hydroxyde de sodium.

7. Procédé selon l'une des revendications 1 à 6, caractérisé par le fait qu'on condense en plus le composé de formule (4) avec le chlorure de cyanuryle et l'acide métanilique, afin d'obtenir un colorant de formule:

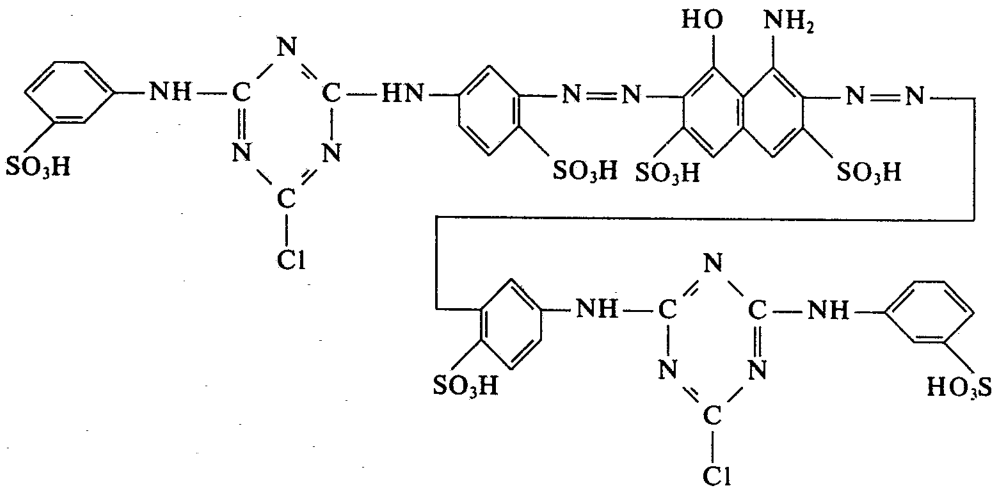

(7)